Europäisches Patentamt

European Patent Office

Office européen des brevets

(11) Publication number: **0 179 845**
**B1**

# (12) EUROPEAN PATENT SPECIFICATION

(45) Date of publication of patent specification: **09.08.89**    (51) Int. Cl.⁴: **H 01 B 3/44**

(21) Application number: **85902211.3**

(22) Date of filing: **30.04.85**

(88) International application number:
**PCT/SE85/00190**

(87) International publication number:
**WO 85/05216 21.11.85 Gazette 85/25**

(54) INSULATION COMPOSITION FOR CABLES.

(30) Priority: **03.05.84 SE 8402396**

(43) Date of publication of application:
**07.05.86 Bulletin 86/19**

(45) Publication of the grant of the patent:
**09.08.89 Bulletin 89/32**

(84) Designated Contracting States:
**BE CH DE FR GB IT LI NL SE**

(56) References cited:
**EP-A-0 061 125**
**EP-A-0 085 390**
**GB-A-2 019 412**
**GB-A-2 141 719**
**SE-B- 369 244**

(73) Proprietor: **NESTE OY**
**Keilaniemi**
**SF-02150 Espoo (FI)**

(72) Inventor: **FARKAS, Andras, Antal**
**Soldatvägen 6**
**S-444 00 Stenungsund (SE)**

(74) Representative: **Wiklund, Erik et al**
**AWAPATENT AB Box 5117**
**S-200 71 Malmö (SE)**

Courier Press, Leamington Spa, England.

**Description**

The present invention relates to the use of a composition for insulation of medium and high voltage cables. The composition, which is cross-linkable, consists essentially of a combination of a homopolymer of ethylene, or a linear copolymer of ethylene and an alpha-olefin, having 3 to 14 carbon atoms and an ethylene-alkyl acrylate or ethylene-alkyl methacrylate copolymer. The compositions have very good thermal and electrical stability properties.

The development in the field of power cables goes towards higher and higher service temperatures and higher demands are thus made on the ability of the insulation material to withstand these and to withstand increased, very high, temperatures due to overload and short-circuit currents. It is further extremely important that the material can withstand formation of so-called water trees, which are initiated, among other things, from sites with specially high electrical stress, but will grow at a lower stress, and which gradually can lead to breakdown and considerably reduce the service life of the wire or cable.

Polyethylene is widely used as a cable insulating material. On the other hand, copolymers of ethylene and polar materials such as vinyl acetate and ethylene acrylate are essentially used only as jacketing material and only to an insignificant extent as insulation material, and then only for low voltage purposes. The thermomechanical stability is generally improved by cross-linking and cross-linked materials are thus predominantly used. Copolymers of ethylene and alpha-olefins, linear ethylene polymers, have, as such, better thermomechanical properties than conventional branched homopolymers of corresponding density. Several additives have been suggested in order to solve the problems of water treeing, e.g. different silanes. It has also been suggested to add an ethylene-vinyl acetate copolymer as a water treeing inhibitor to polyethylene.

With regard to known compositions comprising ethylene homopolymers and/or ethylene copolymers for various applications the following can be mentioned. EP—A—61125 discloses compositions comprising mixtures of polyethylene and ethylene-alkyl acrylate copolymers, organic bromocompounds and antimony oxide fillers. The compositions are used as covering materials, particularly for telephone cables. SE—B—369244 discloses insulation materials for use as cable splicings and terminations. The polymeric compositions contain a specific anti-track filler system. GB—A—2019412 relates primarily to cross-linked linear low density polyethylene and further discloses numerous combinations of blends of this polymer with other polymers for various purposes. EP—A—85339 discloses electrical insulation materials for medium and high voltage cables. The polyolefin based material contains certain phosphates or phosphoric acid esters as water treeing inhibitors. Further, it can be mentioned that GB—A—214179, a document published later than the priority date of this application, discloses ethylene polymer compositions with ethylene polymers of extremely high molecular weight.

According to the present invention it has been found that compositions of ethylene polymers and ethylene-alkyl acrylate or ethylene-alkyl methacrylate copolymers have very good thermal properties and that they are particularly suitable as insulation material for high voltage wire and cable, conferring resistance to water tree formation.

The compositions are utilized cross-linked on the cables. They can be cross-linked by radiation or by chemical cross-linking without risk of degradation. A particular advantage is that they can stand the very high cross-linking temperatures which are utilized in the more recent cross-linking processes such as in dry cross-linking e.g. in nitrogen atmosphere, without being degraded and giving rise to corrosive degradation products.

The present invention thus relates to the use of a cross-linkable composition, for insulation of medium and high voltage cable for an electrical field strength above 1 kV/mm, which composition consists essentially of an ethylene polymer, said ethylene polymer being a homopolymer of ethylene or a copolymer of ethylene and an alpha-olefin, and an ethylene-alkyl acrylate or an ethylene-alkyl methacrylate copolymer in an amount of 10 to 40 per cent by weight based on the combination of ethylene polymer and acrylate polymer. The invention relates particularly to the use of a composition, as stated above, which contains a cross-linking agent.

The base polymer in the present compositions is a homopolymer of ethylene or a linear copolymer of ethylene and one or several alpha-olefins. The latter ethylene polymers are essentially linear and are produced by copolymerization of ethylene and alpha-olefins having 3 to 14 carbon atoms. Generally 1 to 20 percent by weight of the copolymer is used. The ethylene polymer in the present compositions suitably has a density which does not exceed 940 kg/m$^3$, as non-cross-linked material, and the density is suitably within the range of from 915 to 935 kg/m$^3$. The melt index for the ethylene base polymer, MI$_2$, (measured according to ISO 1133, 2.16 kg weight at 190°C) should preferably be within the range of 0.1 to 20 g/10 m in., and most preferably within the range of from 0.5 to 10. The base polymer in the compositions is preferably a homopolymer of ethylene, and preferably high pressure polyethylene.

The acrylate copolymers in the compositions are copolymers of ethylene and alkyl acrylate or alkyl methacrylate wherein the alkyl groups usually have 1 to 8 carbon atoms, e.g., methyl acrylate, ethyl acrylate, propyl acrylate, n-butyl acrylate, i-butyl acrylate, methyl methacrylate, ethyl methacrylate. Copolymers of two or more of the mentioned acrylates or methacrylates may of course also be used. The copolymers are present in an amounts of 10 to 40 per cent by weight based on the combination with the ethylene base polymer. Ethylene-alkyl acrylate copolymers are preferred and especially copolymers of ethylene and n-butyl acrylate which have especially satisfactory thermo-oxidative stability in contact with copper. The acrylate copolymer suitably has a melt index of 2 to 60 g/10 min. ($MI_2$ measured as stated earlier). The content of acrylate in the copolymer should suitably be within the range of from 9 to 50 percent by weight. Higher acrylate contents in the copolymers seem to lead to shorter trees and lower tree density, and thus a copolymer with an acrylate content of 15 to 35 per cent by weight is preferably used, and most preferably a copolymer with an acrylate content within the range of from 18 to 30 percent by weight. In the present compositions the acrylate copolymer is present in an amount of 10 to 40 percent by weight and preferably in an amount of 10 to 35 percent by weight. The mentioned values are percent of the acrylate copolymer based on the combination of this and the ethylene polymer.

The insulation composition is used for medium and high voltage cable and hereby is meant wire and cable for an electrical field strength above 1 kV/mm and particularly above 1.8 kV/mm.

The compositions are used in a cross-linked stage on the cables and they can be cross-linked in a known manner by radiation cross-linking or using chemical cross-linking agents. Chemical cross-linking agents are conventional such agents such as organic peroxides and azo compounds and also silanes. Chemical cross-linking agents can be present in the compositions or be added afterwards, at the cable production. Preferred compositions contain an effective amount of a cross-linking agent selected from organic peroxides, azo compounds and silanes. Organic peroxides are preferred and as examples of such can be mentioned dicumyl peroxide and di-tert. butyl peroxide. The required amount of cross-linking agent depends among other things on the desired degree of cross-linking, the type of cross-linking agent and the type of ethylene base polymer. When the base material is polyethylene the amount of cross-linking agent is suitably within the range of from 0.5 to 6 percent by weight, based on the combination of ethylene base polymer and acrylate copolymer. For linear ethylene polymers smaller amounts of cgvfs-linking agents can be used to obtan the same degree of cross-linking and the amount is here suitably within the range of from 0.2 to 5 percent by weight.

Particularly preferred compositions according to the present invention comprise polyethylene as base polymer, an ethylene-alkyl acrylate copolymer and a cross-linking agent, preferably an organic peroxide.

For high voltage cables an outer bonded semiconducting layer of an ethylene-alkylacrylate copolymer is often used. The present compositions give the highest compatibility with such layers and thus the highest adhesion. Medium and high voltage cables with a bonded outer semiconducting layer of an ethylene-acrylate copolymer and an insulation of the present composition will thus have the best possible total electrical properties.

If an ethylene-vinyl acetate copolymer, or a non-acrylate copolymer, is used in the outer semiconducting layer for strippable such layers, which are sometimes desired, the strippability will presumably be improved in combination with the present insulation composition.

The present insulation compositions consist essentially of the ethylene polymer and the ethylene-acrylate copolymer as previously defined. Even if other polymeric materials may be included the compositions do preferably not contain any other polymeric materials, and at least not more than 10 percent by weight of such materials. The compositions can of course contain additives which are conventional for this type of materials such as anti-oxidants, cross-linking accelerators and cross-linking retardants, other additives to inhibit water treeing, prorads, field strength regulators etc, which are used in minor amounts with regard to the base composition. Inorganic materials, for example fillers such as aluminium hydroxides, kaolin and antimony oxides, should preferably not be present in the compositions, and at least not in higher amounts than 2 percent by weight as most such materials have a negative effect on dielectric losses in higher amounts.

The compositions can be prepared in a conventional manner by mixing in conventional, batch or continuous, mixing equipment. The added ethylene-acrylate copolymer can suitably be used as a carrier for other additives such as cross-linking agents, antioxidants etc.

The compositions are applied to a metal conductor, over the on this usually present semi-conducting layer, as insulation. One embodiment of the present invention also relates to an insulated cable comprising a metal conductor, a semi-conducting layer and an insulation of the present composition and an outer semiconducting layer extruded over this and then cross-linked. The comositions can be cross-linked, e.g. by using the recently developed and increasingly utilized high temperature cross-linking processes, dry curing processes where the temperatures are at about 250°C or higher. In contrast to other types of copolymers, such as ethylene-vinyl acetate copolymers, the present compositions with acrylate copolymers can be treated at these high temperatures without any substantial degradation and without release of corrosive degradation products. This means that insulation according to the invention has an extremely good resistance to thermal degradation and thus an increased service life. Insulation according to the invention also has a very good electrical stability and reduced or inhibited water tree formation.

The invention is further illustrated in the following examples, which, however, are not intended to limit the same. Parts and per cent relate to parts by weight and per cent by weight, respectively, unless otherwise stated.

Example

The ability of compositions according to the invention to withstand formation of water trees was examined by testing on Rogowsky objects. The presence of so-called bow tie trees and so-called vented trees were examined and also the average size of the longest trees. Bow tie trees grow from irregularities inside the insulation while vented trees grow from the interface between insulation and semiconductor. Rogowsky objects give a homogeneous electrical field as in a cable in service. The objects look like small containers and from the earth side there is an aluminium sheet serving as a water diffusion barrier and earth electrode. Next to this sheet there is a semiconductor and the two sheets are moulded together. Next to the semiconductor is the insulation, prepressed from extruded tape. Upon the insulation a water container is placed and the water is connected with a high voltage generator. The container, insulation and semiconductor with the aluminium sheet are assembled in a mould and pressed and the insulation is cross-linked. The samples are conditioned three days at 90°C in an oven with air circulation. The objects are then subjected to an electrical stress of 6 kV/mm at 90°C for 3 weeks. Slices are then cut with a microtome from the objects, dyed and examined in a microscope.

The following compositions were examined as described above (in all compositions the base polymer was a polyethylene with a density of 922 kg/m³ and a $MI_2$ of 2):

a) 70% polyethylene and 30% of an ethylene-n-butylacrylate copolymer ($MI_2$=4) with an acrylate content of 27%.

b) 81.5% of polyethylene and 18.5% of ethylene-n-butylacrylate copolymer according to a)

c) 70% of polyethylene and 30% of an ethylene-n-butylacrylate copolymer ($MI_2$=4) with an acrylate content of 17%.

d) 75% of polyethylene and 25% of ethylene-n-butylacrylate copolymer according to a)

Comparison was made with the polyethylene base polymer (e) ref.) and also with an ethylene-ethylacrylate copolymer containing 1.8% of ethylacrylate (f) ref.). All samples were cross-linked with peroxide and tested in the cross-linked stage.

The results are shown in the following table. The tree density has been classified according to a scale where 0=0 trees per cm³, 1=up to 300 trees, 2=301 to 800 trees, 3=801 to 1500 trees, 4=1501 to 2000 trees and 5=more than 2000 trees.

| | Bow tie trees | | Vented trees | |
|---|---|---|---|---|
| Composition | density | size μm | density | size μm |
| a) | 0—1 | ≤10 | 0 | 0 |
| b) | 0—1 | 35 | 0 | 0 |
| c) | 1 | 25 | 0 | 0 |
| d) | 0—1 | 15 | 0 | 0 |
| e) ref. | 3 | 90 | 2 | 180 |
| f) ref. | 1—2 | 27 | 1—2 | 35 |

It should be noted that all compositions according to the invention were completely free from vented trees while both the reference compositions showed high amounts of such trees and also higher amounts of bow tie trees. It should also be mentioned that most commercial cross-linked polyethylene cable insulations at these test show a bow tie tree density according to the above scale of 3 to 5.

**Claims**

1. Use of a cross-linkage composition which consists essentially of an ethylene polymer, which is a homopolymer of ethylene or a linear copolymer of ethylene and an alpha-olefin having 3 to 14 carbon atoms, and an ethylene-alkyl acrylate or ethylene-alkyl methacrylate copolymer in an amount of 10 to 40 per cent by weight, based on the combination of ethylene polymer and acrylate copolymer, for insulation of medium and high voltage cables for an electrical field strength above 1 kV/mm.

2. Use according to Claim 1, characterized in that the composition contains a cross-linking agent.

3. Use according to Claim 2, characterized in that the cross-linking agent is an organic peroxide.

4. Use according to Claim 1, characterized in that the composition contains 10 to 35 percent by weight of acrylate copolymer, based on the combination of ethylene polymer and acrylate copolymer.

5. Use according to any of the preceding claims, characterized in that the acrylate copolymer in the composition is ethylene-n-butyl acrylate copolymer.

6. Use according to any of the preceding claims, characterized in that the acrylate content in the acrylate copolymer in the composition is within the range of from 9 to 50 percent by weight.

7. Use according to any of the preceding claims, characterized in that the ethylene polymer in the composition has a melt index within the range of from 0.5 to 10 g/10 min.

8. An insulated medium- or high voltage cable for an electrical field strength above 1kV/mm comprising a metal conductor, a semiconducting layer and an insulation of a cross-linked composition consisting essentially of an ethylene polymer, which is homopolymer of ethylene or a linear copolymer of ethylene and an alpha-olefin having 3 to 14 carbon atoms, and an ethylene-alkyl acrylate or ethylene-alkyl methacrylate copolymer in an amount of 10 to 40 percent by weight, based on the combination of ethylene polymer and acrylate copolymer, and an outer semiconducting layer extruded over this.

## Patentansprüche

1. Anwendung einer vernetzbaren Komposition, bestehend hauptsächlich aus einem Äthylenpolymer, das ein Homopolymer von Äthylen oder ein lineares Copolymer von Äthylen und einem Alpha-Olefin mit 3—14 Kohlenstoffatomen ist, und einem Äthylen-alkylacrylat- oder Äthylenalkylmethacrylat-Copolymer in einer Menge von 10—40 Gew.-%, auf Basis der Kombination von Äthylenpolymer und Acrylat-copolymer, zur Isolierung von Mittel- und Hochspannungskabeln für eine elektrische Feldstärke von mehr als 1 kV/mm.

2. Anwendung nach Anspruch 1, dadurch gekennzeichnet, dass die Komposition einen Vernetzer enthält.

3. Anwendung nach Anspruch 2, dadurch gekennzeichnet, dass der Vernetzer ein organisches Peroxyd ist.

4. Anwendung nach Anspruch 1, dadurch gekennzeichnet, dass die Komposition 10—35 Gew.-% Acrylatcopolymer auf Basis der Kombination von Äthylenpolymer und Acrylatcopolymer enthält.

5. Anwendung nach einem der vorhergehenden Ansprüche, dadurch gekennzeichnet, dass das Acrylatcopolymer der Komposition Äthylen-n-butylacrylat-Copolymer ist.

6. Anwendung nach einem der vorhergehenden Ansprüche, dadurch gekennzeichnet, dass der Acrylatgehalt des Acrylatcopolymers der Komposition im Bereich 9—50 Gew.-% liegt.

7. Anwendung nach einem der vorhergehenden Ansprüche, dadurch gekennzeichnet, dass das Äthylenpolymer der Komposition einen Schmelzfluss-Index von 0,5—10 g/10 min. aufweist.

8. Isoliertes Mittel- oder Hochspannungskabel für eine elektrische Feldstärke von mehr als 1 kV/mm, umfassend einen Metalleiter, eine halbleitende Schicht und eine Isolierung aus einer vernetzten Komposition, bestehend hauptsächlich aus einem Äthylencopolymer, das ein Homopolymer von Äthylen oder ein lineares Copolymer von Äthylen und einem Alpha-Olefin mit 3—14 Kohlenstoffatomen ist, und einem Äthylen-alkylacrylat- oder Äthylenalkylmethacrylat-Copolymer in einer Menge von 10—40 Gew.-%, auf Basis der Kombination von Äthylenpolymer und Acrylatcopolymer, und eine darüber extrudierte äussere, halbleitende Schicht.

## Revendications

1. Utilisation d'une composition réticulable qui consiste essentiellement en un polymère d'éthylène, qui est un homopolymère de l'éthylène ou un copolymère linéaire de l'éthylène et d'une alpha-oléfine ayant 3 à 14 atomes de carbone, et un copolymère d'éthylène-acrylate, d'alkyle ou d'éthylène-méthacrylate d'alkyle en quantité de 10 à 40% en poids, basé sur la combinaison du polymère d'éthylène et du copolymère d'acrylate, pour l'isolation des câbles moyenne tension et haute tension pour une intensité de champs électrique supérieure à 1 kV/mm.

2. Utilisation selon la revendication 1, caractérisée en ce que la composition contient un agent de réticulation.

3. Utilisation selon la revendication 2, caractérisée en ce que l'agent de réticulation est un peroxyde organique.

4. Utilisation selon la revendication 1, caractérisée en ce que la composition contient 10 à 35% en poids de copolymère d'acrylate, basé sur la combinaison du polymère d'éthylène et du copolymère d'acrylate.

5. Utilisation selon l'une quelconque des revendications précédentes, caractérisée en ce que le copolymère d'acrylate dans la composition est le copolymère d'éthylène-acrylate de n-butyle.

6. Utilisation selon l'une quelconque des revendications précédentes, caractérisée en ce que la teneur en acrylate dans le copolymère d'acrylate dans la composition est comprise dans l'intervalle de 9 à 50% en poids.

7. Utilisation selon l'une quelconque des revendications précédentes, caractérisée en ce que le polymère d'éthylène dans la composition a un indice de fusion compris dans l'intervalle 0,5 à 10 g/10 min.

8. Un câble moyenne tension ou haute tension isolé pour une intensité de champ électrique supérieure à 1 kV/mm comprenant un conducteur métallique, une couche de semi-conducteur et un isolant en une composition réticulée constituée essentiellement d'un polymère d'éthylène, qui est un homopolymère de l'éthylène ou un copolymère linéaire de l'éthylène et d'une alpha-oléfine ayant 3 à 14 atomes de carbone, et un copolymère d'éthylène-acrylate d'alkyle ou d'éthylène-méthacrylate d'alkyle en quantité de 10 à 40% en poids, basé sur la combinaison du copolymère d'éthylène et du copolymère d'acrylate, et une couche extérieure de semi-conducteur extrudée sur cet isolant.